# EUROPEAN PATENT SPECIFICATION

(11) **EP 3 958 086 B1**
(45) Date of publication and mention of the grant of the patent: **17.12.2025**
(21) Application number: 21191959.2
(22) Date of filing: 18.08.2021
(51) Int. Cl.: G05D 1/246

(54) **A METHOD AND A SYSTEM OF IMPROVING A MAP FOR A ROBOT**
VERFAHREN UND SYSTEM ZUR VERBESSERUNG EINER KARTE FÜR EINEN ROBOTER
PROCÉDÉ ET SYSTÈME D'AMÉLIORATION D'UNE CARTE POUR UN ROBOT

(30) Priority: 19.08.2020 US 202063067505 P
(43) Date of publication of application: 23.02.2022
(73) Proprietor: Carnegie Robotics, LLC, Pittsburgh, Pennsylvania 15201 (US)
(72) Inventor: LaRose, David, Pittsburgh, 15201 (US); Somerville, Andrew, James, Pittsburgh, 15201 (US); Jakhotia, Anurag, Pittsburgh, 15201 (US)
(74) Representative: Inspicos P/S

(56) References cited:
- US-A1- 2010 070 078
- US-A1- 2014 267 703
- US-A1- 2020 160 093

## Description

The present invention relates to a method and a system for improving a map for a robot and in particular to a method and system generating a map, identifying low quality/position accuracy portions thereof and then moving the robot to a determined position to obtain improved data for improving the map.

Relevant technology may be seen in CN108801253 and CN201710289313, US2005/0273257, US2014/267703, US2020/160093, US2010/070078 and EP0890849. The present invention relates to a novel manner of improving map data useful for robot navigation.

In a first aspect, the invention relates to a method according to claim 1.

In the present context, a map is a collection of data or information describing relative positions of obstacles in the environment. The map may be interpreted to illustrate areas or surfaces which the robot can move on. Alternatively, the map may be interpreted to illustrate boundaries within which the robot may move. Maps may be two-dimensional or three-dimensional. Two-dimensional maps may be generated based on the scene or venue at a predetermined height, such as 10-30 cm, such as 20cm from the floor or bottom. Alternatively, a two-dimensional map may be formed by projecting the obstacles to a predetermined, often horizontal, plane. Three-dimensional maps may take into account the different shapes of obstacles and the robot, as a robot may reach or impact on an obstacle at one height while not at another height. Thus, if the map is generated at the "another" height, the robot could impact on the obstacle even when a two-dimensional map would say that there is still space between the obstacle and the robot.

A simple map may be an illustration illustrating boundaries of all obstacles of the scene/venue projected onto a horizontal surface. Maps often are illustrated in a scaled-down version if displayed to e.g. an operator. Different types of maps exist, such as Occupancy Grids and TSDFs. In an Occupancy grid, the space is divided into a grid of map cells, where each cell contains an estimate of the probability that that cell is occupied by an obstacle. Thus, the map may be represented by a number of map cells each representing a possibility or risk of there being an obstacle. Often this possibility is a number between 0 and 1.

A TSDF (truncated signed distance field) is like an occupancy grid, but here each cell contains the distance to the nearest obstacle, if there is an obstacle within some truncation distance. This map may be represented with distance measures for each cell or more simply as a colour indicating from e.g. green indicating a large distance to red indicating no distance.

From a map, it is desirable to be able to determine, from a position of the robot, the distance to an obstacle along a particular direction from the robot. Thus, when the robot moves in the direction, the distance to the obstacle is preferably determinable.

A scene or venue may be any type of room or space, depending on the type of space and the type and function of the robot. A lawn mowing robot would need a map of the lawn, where obstacles may be an outer boundary, trees, buildings, flower beds or the like.

A floor cleaning robot would need a map of a room, where the obstacles could be walls, furniture, staircases and the like.

A map may be built or generated in a number of manners. Naturally, a person with a yardstick may determine the relative positions of the obstacles in the scene/venue, such as walls, pillars, furniture, racks, staircases, windows or the like, or a building construction map may be used.

Usually, the map building and optionally also the map improving steps may be steps performed before the robot transfers to another task, such as a task for which the robot is actually intended, such as cleaning, transport or the like, where the map is required for the operation.

According to the invention, the map is generated by the robot moving in the venue or scene. The robot has one or more remote or non-contact sensors configured to, at a distance, sense a distance (from the robot) to an obstacle as well as an angle between a direction to the obstacle and a predetermined axis of the robot.

A remote sensor may be a sensor configured to determine the presence and relative position of an obstacle vis-à-vis the sensor and/or the robot. The sensor may be based on a wireless sensing system, such as an optical system, such as stereo imaging, sensors using focal length and sharpness in the image, monocular sensors deriving structure of the obstacles from different images taken from different positions of the robot, structured light sensing, LIDAR, such as scanning LIDAR or flash LIDAR, time of flight sensors, such as based on LED, RADAR or the like. Such systems are capable of determining from received radiation the presence of the obstacle as well as where the obstacle is. The position of the obstacle is determined as a direction toward the obstacle and a distance to the obstacle. Naturally, any other type of coordinates may be used. Polar coordinates are advantageous but in no way limiting.

Other types of remote sensors may be ultrasonic sensors, SONAR type sensors.

Sensors of the above types may be used for sensing obstacles even before reaching them. Thus, the robot may travel along a path which is safe while determining the positions of the obstacles. The sensors may also be used for sensing moving obstacles, such as persons moving around in a supermarket in which the robot navigates. Thus, the robot may detect such persons before hitting them.

In addition to the above sensors, robots may comprise additional sensors, such as sensors for determining a type of floor or covering on which they move, a degree of dirt or liquid on the surface, as well as the presence of steps or drops. A downward drop may not be detected by a LIDAR but may be detrimental to the robot. An upward step may not be detected by a LIDAR, if this is positioned above the top of the step. Thus, such additional sensors may be used not only for building the map but also to keep the robot safe or may be used in the operation of the robot in addition to the map building operation.

Step A) is a part of an initial building or generation of the map. The robot will move in the scene or venue and the sensor(s) will operate to detect any obstacles, and a map will be generated from the output of the sensor(s). As described above, additional sensors and additional data may be used if desired. Clearly, this step may additionally comprise the robot performing another operation for which it is designed, such as cleaning floors. In this process, the robot may be guided by the partial map generated and perform the operation both during step A) but also later.

The map may be generated as is usual in map generation, where a position of the robot may be combined with the detection of the sensor(s) so that positions of obstacles may be determined in the room/venue/scene. The position of the robot may be determined also using the sensors of the robot. The relative movement of a robot may be determined from the sensors thereof, as remote sensors will experience different distances and/or angles to known obstacles. An odometer and/or inertial measuring unit may determine a distance travelled, angles turned or the like. The combined output of the sensors may estimate a position or movement of the robot.

Other types of sensors, such as GPS modules or other positioning sensors, such as visual odometry or optical position sensors as used on optical computer mice, such as cameras determining movement of what is in their field of view, may be used in addition or alternatively.

Having now generated the map, a quality/position accuracy of one or more individual portions of the map may be determined. The quality/position accuracy of a map often will relate to how well an obstacle is defined. If the quality/position accuracy is high, the position of the obstacle may be well defined so that the robot can rely on this position and thus will not crash into the obstacle. Naturally, the output of multiple sensors may be combined in any desired manner, such as using one of a number of existing SLAM algorithms, statistical filters and sensor fusion algorithms.

Thus, in one situation, obstacles may not be detected or completely or sufficiently detected. In such situations, the quality/position accuracy of the map may be low at positions where the presence or extent of an obstacle is not known or only partly known.

In one situation, each obstacle is assumed to be determined if its boundary in the map is a closed curve. In that situation, the obstacle will be known irrespective of from which angle the robot approaches the obstacle. Naturally, an outer boundary of the room/venue/scene may be seen as a closed curve within which the robot may move.

Thus, the initially generated map may be analysed and portions thereof with a quality/ position accuracy below a threshold quality/position accuracy may be determined.

According to the invention, the robot and the sensor(s) thereof is/are used for improving the map by obtaining improved data relating to the low quality/position accuracy portion(s) of the map.

When a low quality/position accuracy portion is identified, a position is determined from which the sensor(s) of the robot may detect this portion and thus generate improved data.

Often, when the same portion of the scene/venue is detected more times, the precision will increase. However, clearly it is desired that if the initial precision is low, a higher precision determination is desired. Thus, moving the robot to the position and obtaining more data will increase the quality/position accuracy of the determination of the portion.

When the improved data is received, the map may be altered by this data to increase the quality/position accuracy of the pertaining portion of the map.

In one embodiment:
- step A comprises determining:
   - when in a first position, an obstacle at a third position in the scene or venue,
   - when in a second position, no obstacle at the third position, and wherein
- step D)1) comprises determining the position as a position different from the first and second positions and from which the sensor(s) may determine any obstacle at the third position.

Usually, a robot when moving around the scene or the like will sense the surroundings at the same time. Thus, the sensors will output information as to obstacles and the position thereof. Such information may vary over time and from position to position of the robot. Errors may occur where the sensors output information as to an obstacle at a, third, position, where no obstacle exists. In one situation, this may be seen as a type of mirroring where an obstacle is erroneously detected on the other side of a wall along which the robot moves. Thus, when in the first position, the sensors will output information indicating that an obstacle is present in the third position. However, when the robot moves to the other side of the wall, such as to the second position from which the third position, of the erroneously detected obstacle, may be re-detected, other information is generated indicating that no obstacle exists at this position. Now the information of the map is of low quality/position accuracy for not only the third position but also the first position and the second position. To solve that problem, it may be decided to move the robot to another position, which is not the first position or the second position, so as to obtain additional knowledge. This other position should be one from which the third position may be viewed or sensed by the sensors so that more information may be derived from the third position. This additional information may be added to the existing information and thus may be used for increasing the quality/position accuracy of the information relating to the third position.

In one situation, a first distance exists between the first and second positions, and the new position may be selected at least 5% of that distance from either of the first and second positions so that the new position is not in the vicinity of the first and second positions. In this manner, high quality/position accuracy information may be derived relating to the third position.

In another situation, the new position is selected rather close to one of the first and second positions. Naturally, from this new position, it may be checked whether from this new position an obstacle is detectable or not in the third position. In addition to this, the quality/position accuracy of the information already available relating to the pertaining first/second position may also be increased due to the additional sensing at that position.

As mentioned, a particular situation where this problem may be encountered is one wherein the map indicates an obstacle between the first position and the third position. Situations exist where the sensors mirror in obstacles and thus erroneously detect obstacles at erroneous positions relating to the actual obstacle.

In one situation, step C) comprises allocating a low quality/position accuracy to a portion of the map if the portion comprises part of an opening of an open curve of the map. Thus, when an obstacle is not completely determined, it will be represented as an open curve. The low quality/position accuracy may then be allocated to the curve portions next to the opening - or to a position between the end portions. In one situation, a measure of the quality/position accuracy may be made dependent on the distance between opposing curve portions of the opening. If, for example, the opening is below a threshold limit, a quality/position accuracy may be allocated, such as if the opening is so small that the robot cannot travel through an opening with that distance. Thus, even though it is not known how the obstacle extends at that portion of the scene or venue, it at least cannot pose a threat to the robot. Thus, a quality/position accuracy of a portion of the map may be set above the quality/position accuracy threshold, if a distance between opposing ends of an open curve is below a threshold distance.

Then, step D)2) may comprise generating improved data relating to new portions of the open curve. The robot may be moved to a position from which one or more end portions of the curve of the obstacle may be seen. Thus, additional portions of the obstacle may be detected and thus added to the map. Thus, the curve representing the obstacle may be closed, or the opening thereof may be reduced in size and/or number.

In the same or another embodiment step C) comprises allocating a low quality/position accuracy to a portion of the map, the detection of which is made with a position precision below a precision threshold.

As mentioned above, a position precision may be determined when building the initial map. For one or more portions, the accuracy of the position of that portion in the map may be determined. The accuracy may depend on a number of factors, such as the accuracy of the output of the sensor(s) and/or the accuracy with which the position of the robot is known at the time of detecting the portion.

Different sensors have varying accuracies depending on different factors. A stereo camera has lower position accuracy at larger distances. Also, the spatial accuracy will be lower at higher distances.

LIDARs, for example, usually have a good accuracy also over a distance but may be challenged by reflective materials or areas, such as windows or mirrors. Also, LIDARs have a maximum range within which they are able to detect obstacles. Ultrasonic sensors may detect glass/mirrors but may be challenged by the sound bouncing off different elements and the so-called multipath situation, where sound takes different paths to or from the obstacles.

Often, the more times a portion is detected, the better will the position determination be. Also, when fusing the output of multiple sensors, such as sensors of different types, a higher accuracy is often obtained. The output from multiple sensors may be fused using a Kalman filter, an extended Kalman filter or other fusion techniques, which may also determine a weight of the output of the individual sensor so as to arrive at a higher accuracy than seen from each individual sensor.

The quality/position accuracy measure thus may be a measure of the accuracy of the position, such as a width of a probability distribution covering the detection(s) of the portion, such as a Full Width at Half Maximum (FWHM) or standard deviation measure. Thus, the higher the accuracy, the narrower is the probability distribution, and the higher the quality/position accuracy.

In one situation, step D)1) comprises determining a position from which the robot may sense the portion with a higher position precision. Thus, if the sensor(s) of the robot have increasing position determining accuracy with lower distance, the position may be determined to be sufficiently close to the portion to ensure that the position determination is sufficiently high. This will result in an improvement of the map. Naturally, the position determined may be still determined sufficiently far from the most probable position of the portion so as to ensure that the robot will not hit the obstacle if this is not positioned at the most probable position.

Thus, step D)1) may comprise determining a position closer to the portion of the obstacle than any position obtained during step A), as the lower quality/position accuracy originally obtained is obtained with the robot at the positions of step A).

In one situation, a position may be determined from which the robot sensor(s) may detect not only the portion but also other portions of the scene/venue which are determined with a higher accuracy. This may be advantageous if the original determination of the position of the portion was made with a poor position accuracy of the robot itself. In this situation, it may be desired to position the robot at a more precisely determined position when detecting the portion. Thus step D)1) comprises determining a position from which the sensor(s) sense the portion of the obstacle in addition to one or more other portions of the map having a position precision higher than the precision threshold. In this manner, the detection of the portion will also be made with a higher accuracy.

In general, the controlling in step D) of the robot may be a remote controlling or the instruction of the robot to find its way to the determined position using the map in the state that it is in. Alternatively, step D)2) may comprise outputting instructions to an operator driving the robot. Thus, instructions may be output, such as via sound or on a display, to the operator who will then guide the robot to the desired position. Also, a desired direction of the robot may be indicated to the operator. Step A) can also be obtained by the operator driving the robot in the scene/venue.

Also, generally step D)1) may comprise determining multiple positions and a path in the scene or venue comprising the multiple positions, where step D)2) then preferably comprises moving the robot along the determined path and detecting the determined portions at the determined positions so as to generate improved data.

Thus, if multiple low quality/position accuracy positions are determined, a route may be defined along which the robot will move so as to generate improved data for multiple portions so as to swiftly obtain an improved map.

In one embodiment, the method comprises transmitting the map, including the map quality/position accuracy of the one or more portions of the map, to a server or the like. The server may then perform for example step D)1) and revert to the system, such as the robot, with the positions determined. Additionally or alternatively, the server may receive only the map and perform also or optionally step C) and/ or e.g. store the map for retransmission to the robot, if the robot breaks down or its map becomes corrupted. Another robot may be configured to work in the same scene/venue by simply having that map downloaded.

In one embodiment, step A) comprises determining, for each of a number of positions in the scene or venue, a positioning precision of the robot and adding the position precision to the map. Often, when a robot receives output from one or more sensors, the position accuracy of the robot may be determined from that output. If e.g. two sensors detect different movement of the robot, this discrepancy will result in a lower positioning accuracy. Also, if only one sensor is used for determining the movement, the accuracy of this sensor will determine the positioning accuracy of the robot. This map with positioning precision may then be used for determining a path for the robot in the scene or venue. It may be decided to allow a larger distance to the assumed position of an obstacle if the positioning precision of a portion of the path past the obstacle has a low positioning precision. In that manner, it may be ensured that the robot does not unintentionally hit the obstacle.

In another situation, the robot may be a cleaning robot with a cleaning element, such as a scrubber, which is desired to cover the entire floor of the scene/venue. In that situation, an overlap is usually desired of the passes of the scrubber, when the robot travels along parallel portions to cover the whole floor area. In the situation where a portion of a path has a low positioning precision, it may be desired to define the passes with a lower relative distance to ensure an overlap also at positions where the positioning precision is low.

In this manner, step D)1) comprises determining a position from which the low quality/position accuracy position may be detected and where the position precision is high(er). Thus, if the position accuracy is determined for different positions, this may be used to swiftly identify a position from which the low quality/position accuracy portion may be detected to improve the map.

Another aspect of the invention relates to a system according to claim 10.

Naturally, as described above, the robot may be self-propelled and able to navigate the room or venue autonomously using the sensor(s) even when the map is incomplete. Alternatively, the robot may be controlled by an operator at least until the map has a certain quality/position accuracy.

The processor may be any type of processor, such as a DSP, controller, ASIC, processor, FPGA, software controllable or hardwired. The processor may be an assembly of such elements with communication capability so that portions of the steps or software may be implemented remotely, such as in the cloud. The processor is configured to receive data from the sensor(s) via wires and/or wirelessly. The processor may be provided in the robot or remotely therefrom.

The processor operation may be split so that the initial data manipulation from the sensor(s) may be handled on the robot but where the quality/position accuracy assessment and the position determination is made remotely from the robot.

Naturally, the robot may then comprise not only the sensors but also means for driving the robot, such as wheels, gears, motors, drives, actuators and the like. The robot may be self-propelled and even autonomous. Alternatively, the robot may comprise means for manually manipulating the robot, such as handlebars, handles, steering wheel or the like for an operator to manipulate to direct the robot in the desired direction. An accelerator and/or brake may be provided for an operator.

A sound emitting system and/or a display may be provided for the operator to hear/see in which direction the desired position lies.

One or more antennas or other communication elements may be provided if the robot is not completely autonomous. Software updates may be received or transmitted via antennas, as well as or optionally map information, sensor information, or the like.

In addition, the robot may comprise additional means, such as for use by the robot when moving around in the improved map. Robots are used for a wide variety of tasks, such as cleaning, transport and the like. Thus, the robot may comprise cleaning elements, such as water/detergent tank, floor mop, brushes, pads, squeegees, scrapers, vacuum units, or a cargo hold for holding cargo while transporting it. Other robot types would be inspection robots inspecting or replenishing stock in supermarkets or warehouses or for inspecting or quality testing the environment such as building construction quality, surface layers, such as for detecting or disinfecting bacteria or virus. Further robot types are social interacting robots such as for assisting or guiding persons in homes, warehouses, shops, airports, train stations or the like. Yet other robots could be directed toward surveillance or security. Moving robots also may have manipulating elements, such as a robotic arm, which may be operated when the robot has moved to the desired location using the map.

An interesting technology relates to a method of providing a map of a scene or venue, the method comprising:
A) moving a robot in the scene or venue, the robot comprising one or more remote sensors configured to sense a distance to an obstacle as well as an angle between a direction to the obstacle and a predetermined axis of the robot,
B) generating the map from output of the sensor(s) of the robot,
C) determining, for each of a number of positions in the scene or venue, a positioning precision of the robot and adding the position precision to the map.

Naturally, the scene/venue may be as described above, as may the robot and the sensors.

All above aspects, embodiments and situations may be equally valid in this respect.

The positioning precision of the robot is now determined. This is typically from the output of the sensors and thus in relation to the obstacles detected. Alternatively, other sensor types, such as GPS may be added to the position determination.

The positioning precision is added to the map for the individual position. This positioning precision may be a percentage for which the robot believes that it knows its position or it may be a distance value, covariance or similar measure, such as a possible deviation from the position determined or assumed.

Clearly, if the map is improved, such as by additional runs, the addition of additional sensors, or by other means, the positioning precision may be improved, whereby the below routes and paths may be altered.

In one situation, the positioning precision may be utilized to ensure that the robot does not hit obstacles. Thus, when a path of the robot is planned including a position with a low positioning precision but close to an obstacle, the path may be planned farther from the obstacle in order to avoid a possible collision.

In another situation, the method may be used in a method for controlling a cleaning robot with a cleaning element, the method comprising:
- providing a map according to the above aspect of the invention,
- determining a cleaning route in the scene or venue, the route comprising first route portions which are adjacent to each other and at least substantially parallel to each other,
wherein the determination step comprises
- if a position of a first route portion has a positioning precision below a threshold value, determining the first route portions with a relative distance there between which is below a threshold distance.

In this respect, a high precision will mean that the position of the robot and/or the obstacle is well known, such as when the position thereof is, with a predetermined minimum probability, within a predetermined distance or distance interval. Precision may be determined as a distance or distance interval within which the position (robot, obstacle or between the robot and obstacle) is seen with a probability of e.g. 75% or higher, such as 80% or higher, such as 90% or higher, such as 95% or higher. When the minimum probability is lowered, the distance or distance interval will increase, as less probable positions are increasingly included when the probability is lowered.

Clearly, a position may be known with different precisions along different axes. A robot travelling along a long, straight wall without any markings may not know with a high precision how far it has travelled along the wall, so that the precision in a direction along the wall may be low. On the other hand, the robot may know its distance to the wall with a high confidence or certainty, so that the positioning along this direction is known with a high precision.

Thus, the cleaning robot may have a cleaning element, such as a scrubber or the like, which has a width. An overlap is desired to ensure cleaning of the entire floor. If the positioning precision is high, the overlap may be relatively small so as to cover as much of the floor with each run.

However, if the positioning precision is low, a larger overlap is defined in order to ensure that an overlap will be seen even if the robot is not exactly on the path.

The overlap may be defined as a function of the positioning precision so that the lower the precision the higher the overlap or the closer the two paths to ensure that an overlap will always be seen.

In the following, preferred embodiments will be described with reference to the drawing, wherein:
- Figure 1 illustrates a robot path in a scene/venue as well as the resulting map,
- Figure 2 illustrates a robot with one or more sensors,
- Figure 3 illustrates a probability distribution of the position of an obstacle, and
- Figure 4 illustrates an alternative type of map with a probability per cell.

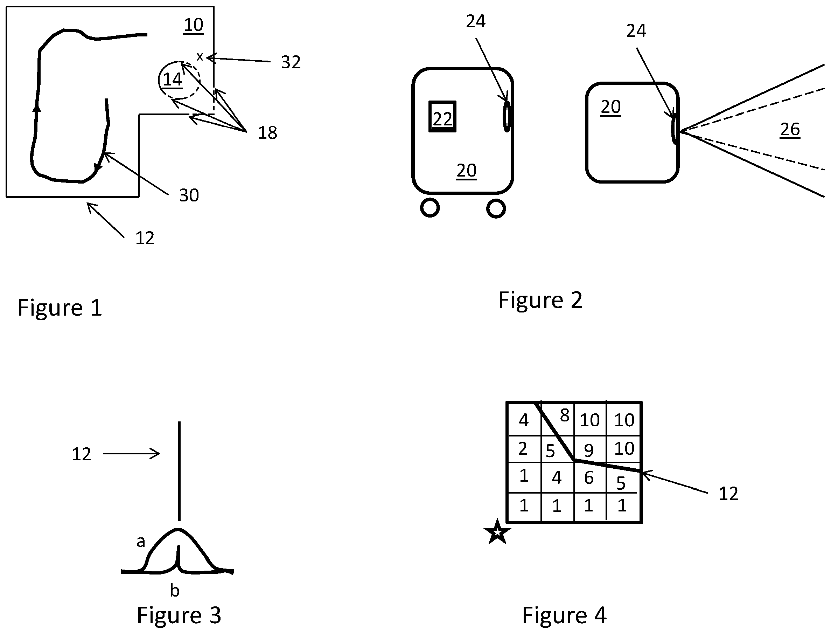

In figure 1, a scene or venue, such as a room 10 is illustrated. The room 10 has a number of walls 12 and a pillar 14. The walls and pillar present obstacles for the robot. The map is generated by a robot 20 (see figure 2) travelling along a path 30, while a remote sensing device 24 senses the positions of the walls 12 and pillar 14. Thus, a map (similar to the scene/venue 10) is generated by the output of the sensing device 24.

A map is generated by the robot moving in the scene/venue while operating one or more sensing devices 24. The sensing devices may have multiple functions, one being the determination of obstacles relative to the robot, and one function being the determination of a position of the robot in the venue/scene.

The position of the robot in the venue/scene may be determined as usual using e.g. triangulation of the position of the robot and positions of detected, known obstacles in the map. Alternatively or additionally, the robot may comprise an odometer and/or inertial measurement unit also assisting in determining how far the robot has moved in a particular direction and thus the present position of the robot.

In the present context, the sensing of obstacles preferably is made remotely, such as via optical or electromagnetic sensing, such as a LIDAR, RADAR, SONAR, ultrasound, monocular cameras, stereo cameras, structured light or the like. In this manner, the robot may sense the relative position between that of the robot and that of the obstacle without touching the obstacle.

This has the advantage that larger portions of the scene/venue may be mapped more quickly, but another advantage is that the robot may then simultaneously sense a first, yet undetected, obstacle while sensing one or more, previously detected obstacles. In this manner, the robot may use the relative position to the previously detected obstacle to assist in the determination of the position of the undetected obstacle in the map.

Then, from the output of the sensing devices, the robot is able to determine the positions of obstacles in the scene/venue.

A problem is seen in the map, as part of the walls 12 and part of the pillar 14 have not been sensed. The broken lines indicate the positions or outlines of the walls and pillar, but the map has no information relating to those portions of the scene/venue. Thus, the map has a low quality/position accuracy at least at these positions.

It is expected that the map will, when complete, comprise a number of closed curves, where an outer curve will be the outer boundaries of the scene/venue and inner curves may represent other obstacles, such as pillars, storage racks, furniture or the like.

Thus in one situation, a low quality/position accuracy of a map may be determined at extreme portions 18 of unbroken lines or curves in the map.

Naturally, if a space between e.g. a pillar and a wall is so small that the robot cannot fit there, it may be acceptable that the map does not comprise data relating to portions of the scene/venue where the robot cannot go. Also, a portion of a space may comprise a lattice gate with openings so small that the robot cannot pass through it. This lattice may present itself as unbroken lines but may be allocated a high quality/position accuracy, as the robot cannot pass through it.

Another common situation is when the robot is only expected to operate in a limited part of the environment. In this situation, there may be no value in mapping the back sides of obstacles outside the robot's domain.

This situation may be alleviated by determining a position from which the robot may sense additional portions of the obstacles defining the extreme portions 18. Thus, the position 32 may be determined, as the robot when positioned there (and rotated correctly if e.g. the sensing device(s) is/are not omnidirectional) may sense additional portions of the pertaining wall and pillar.

Having then, using the sensing device(s) obtained more data relating to these obstacles, the curves of the map may be extended and new low quality/position accuracy portions (extreme portions) may be determined - and the robot may then be moved to another position, until the curves are closed or, optionally, any openings in the curves have a relative distance below a threshold distance.

The position 32 may be determined in a number of manners. Clearly, it is desired to keep the robot in areas which are relatively "safe". Some robots have proximity detectors, step detectors or the like preventing them from e.g. falling down stairs, so that the robot may travel safely even if the remote sensing used for generating the map is not operable or operating. In this manner, it may be possible to drive the robot into portions of the map where no data or insufficient data is provided.

Alternatively, the mapping process may take place by an operator operating the robot, thus ensuring that the robot is safe. The operating may be the operator being positioned on or at the robot during the mapping, or the operator remote operating the robot.

Alternatively, it may be desired to determine a position within a mapped portion of the venue/scene from which non-mapped portions may be seen, so that the map may be incrementally improved.

When the low quality/position accuracy portion comprises an extreme portion of an open curve, the robot may be requested to move to a position from which this edge may be seen, so that any extension of the pertaining obstacle may be detected and the map improved.

In that or another situation, a low quality/position accuracy portion of the map may be a portion in which an obstacle has been detected with an insufficient position precision.

Multiple sources of error exist when determining a position of an obstacle in a scene/venue. Any sensing device will have an uncertainty connected to the position determination. This uncertainty will relate to the type of sensing device.

Another source of uncertainty is the positioning of the robot itself. If the robot position is not known with a large certainty, any determination made relative to this position will have this added uncertainty.

Robot position accuracy may be affected in a number of manners. The position determination often is a combination of the output of multiple sensors. Thus, if a LIDAR or a stereo camera are used together with an odometer, a problem is seen (causing a larger positioning uncertainty) if the odometer does not report the same travelling distance as the stereo camera or LIDAR.

An odometer senses the distance travelled from the rotation of wheels on the robot, whereas a stereo camera or a LIDAR senses the distance travelled by angular changes between the robot and elements in the image or by changes in the measured distance between the sensor and elements in the image or in the vicinity. Thus, if the LIDAR or stereo camera locks on to elements in the space/venue which are not stationary in the venue, the resulting travelling distance determined by the LIDAR/stereo image will not correspond to the actual distance travelled. The robot, however, needs to determine the distance travelled, which it will - but now with a higher uncertainty due to the discrepancy between the outputs of the different sensing systems.

In another situation, the robot may move within a large open space, or along a long, straight wall with uniform curvature, so that the LIDAR/stereo camera will see the same thing while the robot is moving. Thus, the LIDAR/stereo camera may report no movement while the odometer senses movement.

Odometers have a reduced distance precision with increased distance, as the rotation of a wheel will give different distances with different wheel diameters, so that a more worn wheel/tyre will give a higher distance compared to a new wheel/tyre.

Thus, the resulting certainty of the position of a portion of an obstacle in the map will be defined by the combination of such certainties. Thus (see figure 3), the certainty at which the position of a wall 12 may be different between portions of the wall 12, depending on the circumstances under which the individual portions of the wall were determined.

Below the portion of the wall 12 in figure 3 are two probability curves, where curve b illustrates a situation where the estimated position of the wall 12 in the map has a high certainty within a small distance interval (narrow peak), whereas curve a illustrates a situation where the map has about the same probability of the wall 12 being situated anywhere within a larger distance interval (broad peak).

Thus, in this situation, portions of the map, where less certain positioning is seen, may be identified and improved.

The map thus may comprise, for each portion, preferably, a measure of the precision of the position determination thereof. This may be a number, such as between 1 and 100, indicating how certain the position of the obstacle portion actually is. This number may be generated on the basis of the output of the sensing device(s) of the robot.

Another manner of defining a map is seen in figure 4, which divides the scene/venue into a number of cells (here 16 cells are indicated). In the portion of the venue indicated, a wall 12 is indicated. The map is built by sensor output from a robot positioned at the star. The number in each cell illustrates the probability that an obstacle is present in the portion of the venue represented by the cell. The numbers usually are in the interval 0-1 where 0 represents a low probability and 1 a high probability. It is seen that the cells on the back side of the wall are undetermined, as no information is available relating to that portion of the map. Such areas may e.g. be denoted "N/A" or a number outside of the interval 0-1.

The map quality/position accuracy of this portion of the map thus could relate to the steepness of the numbers from the lowest to the maximum value. If only two adjacent numbers are needed, the wall position is known with a better precision than if 4 adjacent cells have numbers between 0 and 1. If the robot had a lower sensitivity sensor, the numbers in cells between the wall (high probability) and the low numbers would be higher, whereby the map quality/position accuracy would be lower.

In figure 2, a processor 22 is illustrated receiving the output from the sensing device(s) 24 and determines the map. Naturally, the processor may be remote from the robot if desired. The processor 22 may also determine the uncertainty of obstacle portions or the presence of open curves as well as the positions to which to move the robot in order to improve the map.

Naturally, this number or precision may change over time. The robot may detect the portion multiple times, so that the precision increases. Determining the same element multiple times and e.g. with different precisions or uncertainties may increase the certainty with which the position is determined.

Then, the robot may be requested to move to a position from which the low-quality/position accuracy portion may be detected. As mentioned, generating additional (improved) position data will increase the precision of the wall position determination.

Such additional position data with a high or higher precision may be sought. This may be obtained by positioning the robot at a position from which the position determination itself has a high(er) precision. Thus, if the sensing device used has a higher precision at lower distances, the robot may be positioned closer to the portion.

In addition, or alternatively, if the origin of the former uncertainty was a low precision in the determination of the position of the robot itself in the scene/venue, a position may be selected for the robot where this position determination has a higher certainty. Then, a high precision robot position is determined by e.g. triangulation from the known obstacles. When the determination of the relative positioning between the robot and the low-quality/position accuracy portion is of good quality/position accuracy, improved data is obtained and used for improving the position and position precision of this portion of the map.

## Claims

1. A method of providing a map of a scene or venue, the method comprising:
A) moving a robot in the scene or venue, the robot comprising one or more sensors for sensing a remote obstacle, the sensors configured to sense a distance to the obstacle as well as an angle between a direction to the obstacle and a predetermined axis of the robot,
B) generating the map from output of the sensor(s) of the robot,
C) determining for at least one portion of the map representing at least a portion of an obstacle, a position precision of the portion of the obstacle ,
**characterized in that** the method further comprises the step of
D) if a portion of the map has a position precision below a precision threshold, i.e., a portion with low position precision:
1) determining a position from which the sensor(s) simultaneously detect the portion with low position precision and one or more portions of the map having a position precision higher than the precision threshold
2) moving the robot to the determined position to detect simultaneously the portions and determine the relative positioning between the robot and the portion with a low position precision, and
3) improving, using the determined relative positioning, the position precision of the portion of the map with a low position precision.

2. A method according to claim 1, wherein:
- step A) comprises:
- when the moving robot arrives at a first position, detecting an obstacle at a third position in the scene or venue,
- when the moving robot arrives at a second position from which the obstacle at the third position should be detected, but it is not, and wherein
- step D)1) comprises determining the position as a position different from the first and second positions and from which the sensor(s) may sense the third position.

3. A method according to claim 2, wherein the determined position is at a distance to either of the first and second positions exceeding 5% of a distance between the first and second positions.

4. A method according to any of the preceding claims, wherein step C) comprises allocating a low position accuracy to a portion of the map, the detection of which is made with a position precision below a precision threshold.

5. A method according to claim 4, wherein step D)1) comprises determining a position closer to the portion of the obstacle than any position obtained during step A).

6. A method according to any of the preceding claims, wherein step D)2) comprises outputting instructions to an operator driving the robot.

7. A method according to any of the preceding claims, wherein step D)1) comprises determining multiple positions and a path in the scene or venue comprising the multiple positions, and wherein step D)2) comprises moving the robot along the determined path and detecting the determined portions at the determined positions so as to generate improved data.

8. A method according to any of the preceding claims, further comprising transmitting the map, including the map position accuracy of the one or more portions of the map to a server, the server performing step D)1).

9. A method according to claim 8, wherein step D)1) comprises determining a position from where the portion may be re-detected and where the position precision is high(er).

10. A system comprising a processor and a robot (20) comprising one or more remote sensors (24) configured to sense a distance to an obstacle (12, 14) as well as an angle between a direction to the obstacle and a predetermined axis of the robot,
wherein the processor (22) is configured to perform a method according to any of the preceding claims.

## Patentansprüche

1. Verfahren zum Bereitstellen einer Karte einer Szene oder eines Schauplatzes, wobei das Verfahren umfasst:
A) Bewegen eines Roboters in der Szene oder dem Schauplatz, wobei der Roboter einen oder mehrere Sensoren zum Erfassen eines entfernten Hindernisses umfasst und die Sensoren eingerichtet sind, einen Abstand zu dem Hindernis sowie einen Winkel zwischen einer Richtung zu dem Hindernis und einer vorbestimmten Achse des Roboters zu erfassen,
B) Erzeugen der Karte von einer Ausgabe des bzw. der Sensoren des Roboters,
C) Bestimmen, für mindestens einen Abschnitt der Karte, der mindestens einen Abschnitt eines Hindernisses darstellt, einer Positionsgenauigkeit des Abschnitts des Hindernisses, **dadurch gekennzeichnet, dass** das Verfahren ferner den Schritt umfasst
D) wenn ein Abschnitt der Karte eine Positionsgenauigkeit unter einem Schwellenwert aufweist, d. h. ein Abschnitt mit niedriger Positionsgenauigkeit:
1) Bestimmen einer Position, von der aus der bzw. die Sensoren den Abschnitt mit niedriger Positionsgenauigkeit und einen oder mehrere Abschnitte der Karte mit einer Positionsgenauigkeit über dem Schwellenwert gleichzeitig detektieren,
2) Bewegen des Roboters zu der bestimmten Position, um die Abschnitte gleichzeitig zu detektieren und die relative Positionierung zwischen dem Roboter und dem Abschnitt mit einer niedrigen Positionsgenauigkeit zu bestimmen, und
3) Verbessern, unter Verwendung der bestimmten relativen Positionierung, der Positionsgenauigkeit des Abschnitts der Karte mit niedriger Positionsgenauigkeit.

2. Verfahren nach Anspruch 1, wobei:
- Schritt A) umfasst:
- wenn der sich bewegende Roboter eine erste Position erreicht, Detektieren eines Hindernisses an einer dritten Position in der Szene oder dem Schauplatz,
- wenn der sich bewegende Roboter eine zweite Position erreicht, von der aus das Hindernis an der dritten Position detektiert werden sollte, dies aber nicht der Fall ist,
und wobei
- Schritt D)1) das Bestimmen der Position als eine Position umfasst, die sich von der ersten und zweiten Position unterscheidet und von der aus der bzw. die Sensoren die dritte Position detektieren können.

3. Verfahren nach Anspruch 2, wobei sich die bestimmte Position in einem Abstand zu einer von der ersten und der zweiten Position befindet, die 5 % des Abstands zwischen der ersten und der zweiten Position überschreitet.

4. Verfahren nach einem der vorstehenden Ansprüche, wobei Schritt C) das Zuweisen einer niedrigen Positionsgenauigkeit zu einem Abschnitt der Karte umfasst, dessen Detektieren mit einer Positionsgenauigkeit unterhalb eines Genauigkeitsschwellenwerts erfolgt.

5. Verfahren nach Anspruch 4, wobei Schritt D)1) das Bestimmen einer Position umfasst, die sich näher an dem Abschnitt des Hindernisses befindet als jede während Schritt A) erhaltene Position.

6. Verfahren nach einem der vorstehenden Ansprüche, wobei Schritt D)2) das Ausgeben von Anweisungen an einen den Roboter lenkenden Bediener umfasst.

7. Verfahren nach einem der vorstehenden Ansprüche, wobei Schritt D)1) das Bestimmen mehrerer Positionen und eines Pfades in der Szene oder dem Schauplatz umfasst, die bzw. der die mehreren Positionen umfasst, und wobei Schritt D)2) das Bewegen des Roboters entlang des bestimmten Pfades und das Detektieren der bestimmten Abschnitte an den bestimmten Positionen umfasst, um verbesserte Daten zu erzeugen.

8. Verfahren nach einem der vorstehenden Ansprüche, ferner umfassend das Senden der Karte einschließlich der Kartenpositionsgenauigkeit des einen oder der mehreren Abschnitte der Karte an einen Server, wobei der Server Schritt D)1) ausführt.

9. Verfahren nach Anspruch 8, wobei Schritt D)1) das Bestimmen einer Position umfasst, von der aus der Abschnitt erneut detektiert werden kann und an der die Positionsgenauigkeit hoch bzw. höher ist.

10. System, das einen Prozessor und einen Roboter (20) umfasst, der einen oder mehrere entfernte Sensoren (24) umfasst, die eingerichtet sind, einen Abstand zu einem Hindernis (12, 14) sowie einen Winkel zwischen einer Richtung zu dem Hindernis und einer vorbestimmten Achse des Roboters zu erfassen, wobei der Prozessor (22) eingerichtet ist, ein Verfahren nach einem der vorstehenden Ansprüche auszuführen.

## Revendications

1. Procédé de fourniture d'une carte d'une scène ou d'un lieu, le procédé comprenant :
A) le déplacement d'un robot dans la scène ou le lieu, le robot comprenant un ou plusieurs capteurs pour détecter un obstacle distant, les capteurs étant configurés pour détecter une distance de l'obstacle ainsi qu'un angle entre une direction vers l'obstacle et un axe prédéterminé du robot,
B) la génération de la carte à partir d'une sortie du ou des capteurs du robot,
C) la détermination, pour au moins une partie de la carte représentant au moins une partie d'un obstacle, d'une précision de position de la partie de l'obstacle,
**caractérisé en ce que** le procédé comprend en outre l'étape suivante :
D) si une partie de la carte présente une précision de position inférieure à un seuil de précision, c'est-à-dire une partie avec une faible précision de position :
1) la détermination d'une position à partir de laquelle le ou les capteurs détectent simultanément la partie avec une faible précision de position et une ou plusieurs parties de la carte présentant une précision de position supérieure au seuil de précision,
2) le déplacement du robot jusqu'à la position déterminée pour détecter simultanément les parties et déterminer le positionnement relatif entre le robot et la partie avec une faible précision de position, et
3) l'amélioration, à l'aide du positionnement relatif déterminé, de la précision de position de la partie de la carte avec une faible précision de position.

2. Procédé selon la revendication 1, dans lequel :
- l'étape A) comprend :
- lorsque le robot en déplacement arrive à une première position, la détection d'un obstacle à une troisième position dans la scène ou le lieu,
- lorsque le robot en déplacement arrive à une deuxième position à laquelle l'obstacle à la troisième position doit être détecté mais ne l'est pas,
et dans lequel
- l'étape D)1) comprend la détermination de la position en tant qu'une position différente des première et deuxième positions et à laquelle le ou les capteurs peuvent détecter la troisième position.

3. Procédé selon la revendication 2, dans lequel la position déterminée est à une distance de l'une des première et deuxième positions dépassant 5 % d'une distance entre les première et deuxième positions.

4. Procédé selon l'une quelconque des revendications précédentes, dans lequel l'étape C) comprend l'attribution d'une faible précision de position à une partie de la carte qui est détectée avec une précision de position inférieure à un seuil de précision.

5. Procédé selon la revendication 4, dans lequel l'étape D)1) comprend la détermination d'une position plus proche de la partie de l'obstacle qu'une position obtenue à l'étape A).

6. Procédé selon l'une quelconque des revendications précédentes, dans lequel l'étape D)2) comprend la délivrance d'instructions à un opérateur pilotant le robot.

7. Procédé selon l'une quelconque des revendications précédentes, dans lequel l'étape D)1) comprend la détermination de multiples positions et d'un trajet dans la scène ou le lieu comprenant les multiples positions, et dans lequel l'étape D)2) comprend le déplacement du robot le long du trajet déterminé et la détection des parties déterminées aux positions déterminées de manière à générer des données améliorées.

8. Procédé selon l'une quelconque des revendications précédentes, comprenant en outre la transmission de la carte, incluant la précision de position de carte des une ou plusieurs parties de la carte à un serveur, le serveur réalisant l'étape D)1).

9. Procédé selon la revendication 8, dans lequel l'étape D)1) comprend la détermination d'une position à laquelle la partie peut être redétectée et à laquelle la précision de position est élevée ou supérieure.

10. Système comprenant un processeur et un robot (20) comprenant un ou plusieurs capteurs distants (24) configurés pour détecter une distance d'un obstacle (12, 14) ainsi qu'un angle entre une direction vers l'obstacle et un axe prédéterminé du robot,
dans lequel le processeur (22) est configuré pour réaliser un procédé selon l'une quelconque des revendications précédentes.
